# EUROPEAN PATENT APPLICATION

(11) **EP 1 837 752 A2**
(43) Date of publication of application: **26.09.2007**
(21) Application number: 07104201.4
(22) Date of filing: 15.03.2007
(51) Int. Cl.: G06F 3/12

(54) **A system for programming processing operations on an ordered set of objects**

(30) Priority: 23.03.2006 US 784805 P
(71) Applicant: Océ-Technologies B.V., 5914 CA Venlo (NL)
(72) Inventor: Bosma, Edward C., 6542 ZV, Nijmegen (NL); Bos, Maria J., 5643 NV, Eindhoven (NL)
(74) Representative: van Meeteren, Arend Anthonie

(57) **Abstract**

A method of programming processing operations, e.g. printing, on an ordered set of objects, e.g. the pages of a document, the objects being characterizable according to a plurality of different properties defining, or at least relevant for, the processing.

The method includes displaying the objects of the set in a one-dimensional ordered object list (31) and at least two spatially related and parallelly disposed property lists (32) each related to a single object property and indicating values of that property in association with the respective objects in the object list.

A user may select an object or a group of objects in any of the lists and select a property value therefor, thereby programming the processing of the objects.

## Description

The present invention relates to a method of programming processing operations on an ordered set of objects, the objects being characterizable according to a plurality of different properties, in a system having a user interface including a display and a user-operable selection device such as a mouse.

More in particular, it relates to a method including: displaying a one-dimensional, ordered object list containing representations of the objects of the set, enabling a user to select an object or a group of objects, a group being an uninterrupted range of objects within the list, and enabling a user to select a property value for the selected object or group of objects, and assigning the selected property value to the selected object or group of objects with respect to the processing operations.

The invention is also related to a system in which the inventive method is implemented, and a computer program product performing the invention.

An example of application of the present invention is in printing documents, more in particular in the centralized printing of documents submitted by users from their workstations to a central reprographic department, in which print jobs are programmed in a server for processing on a printer.

A known method and related system is known from Applicant's product Océ Doc Works^{®}, a server-based output management solution that provides a total digital solution for the entire document workflow.

For a user, in the case of the exemplary central repro department the operator of the server, wishing to program processing operations, it is highly desirable to keep a good overview over the set structure as well as over the particulars of the individual objects (document pages). The known Océ Doc Works product helps in assigning properties to the individual pages of a document, that will be used in the final printing process.

Within an ordered set of objects as mentioned above, there can be ranges of objects (groups) that belong together because they have the same attribute on a certain property. E.g.; in a document a range of pages belong together because they have the same media or they belong to the same chapter.

Another example is a list of photograph-files sorted in chronological order (the "object list"), in which a range of photographs belong together because they are taken in the same location, or are taken in B&W, or other, mode. Property-related processing, such as printing on specific media, or dedicated image processing, may then be programmed according to the inventive method.

Current methods to structure object lists, including the above-mentioned Océ Doc Works, make use of hierarchy. The attribute is represented by a container (e.g. a folder) and the objects with this attribute are placed in this container. This solution allows only grouping on one property at a time (e.g. 'location' or 'size'). A typical way of visualizing this structuring is the so-called "Tree View", in which a container can be opened (all elements shown) or closed (collapsed into one display item) by clicking on a + or - sign, respectively, displayed in relation (possibly over) the container icon.

It is an object of the present invention to provide the user with a comprehensive view and control on a wide range of aspects relevant for the processing, all at the same time.

Therefore, according to the present invention, the method includes displaying at least two property lists associated to and disposed in spatial relationship with the object list, each property list being related to a single object property and indicating values of that property in association with the respective objects in the object list, each respective property value being related to one object or to a said group of objects sharing that property value.

In a more elaborated embodiment, a property list is shown on the display as a bar extending in parallel with the object list, the bar having visually recognizable sections corresponding to different property values, and possibly being provided with summary labels.

The effect of the invention is that in a list of objects, ranges can be visualized by means of vertical bars that visually group sequential objects with the same attribute. Every bar represents a group (a range of pages with the same attribute). A graphical and textual explanation of the group attribute may be displayed on every bar.

Groups can exist on different properties, e.g. in case of a document there can be groups based on the property 'media', groups based on the property 'finishing' and groups based on the property 'chapters'. These properties are given here by way of example only, other properties being easily conceivable, depending on the particular situation.

For every property a column is displayed in which the different ranges are visualized by means of vertical bars. This solution not only allows grouping on different properties at a time, but also allows quick selection of groups on every property by clicking on the corresponding bar.

In addition, any one of the bars / property lists can be made dominant by the operator, and each section of the dominant property list, said section being associated to a single property value, is operable to collapse the object list and related property lists for that section.

Property values can be assigned by an operator to each respective element of the list of objects through the user interface, whereupon the system automatically enters the assigned properties into the property lists.

Other objects and advantages of the present invention will become apparent from the attached description and the appended claims.

The present invention will now be described in an exemplary embodiment, with reference to the accompanying drawings, wherein:
Fig. 1 shows a system in which the present invention may be practiced;
Fig. 2 shows a software suite in which the method of the present invention is embodied;
Fig. 3 is a display image related to the inventive method;
Fig. 4A shows a context menu used in the invention;
Fig. 4B shows a secondary window for media selection;
Fig. 5 shows part of a structure pane in the display image;
Fig. 6 shows part of a structure pane in the display image in a particular situation;
Fig. 7 is a schematic explanatory diagram;
Fig.s 8 A-D are diagrams explaining collapsing the object and group columns; and
Fig. 9 shows a preview image.

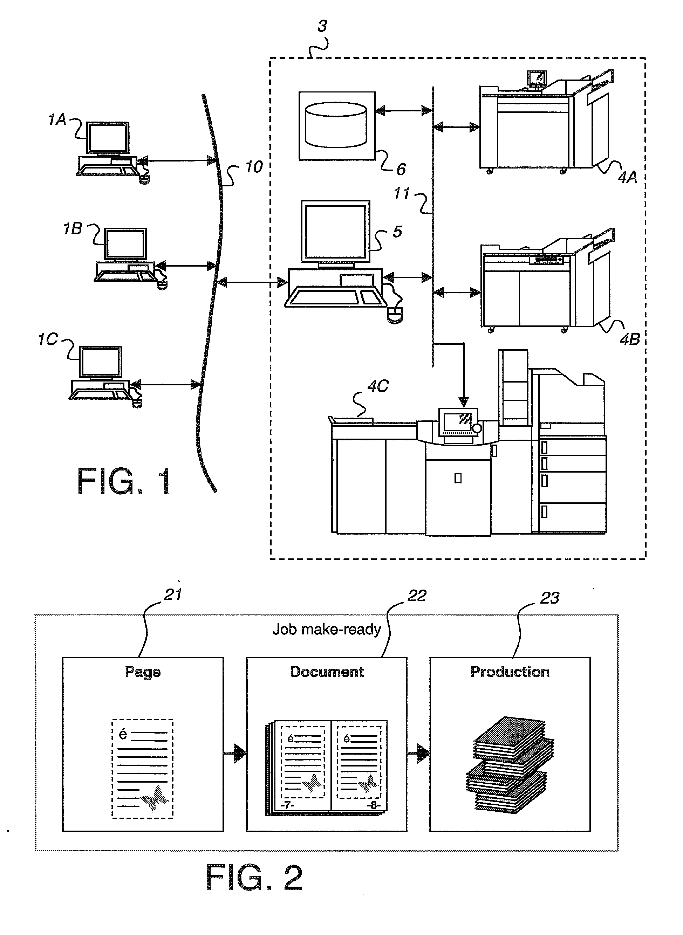

Fig.1 shows a general network system including user workstations 1A, 1B, 1C (e.g., PCs) and a centralized printing facility 2 such as is often called a "central repro department" (CRD), all connected by a network 10 such as a Local Area Network, or even the internet. The CRD includes a plurality of printing devices 4A, 4B, 4C and a server 5, which will normally be a PC. The CRD may also include a document database 6 or be connected to a central database facility acting as a document database. The devices in the CRD are interconnected by a local network 11, which may be part of the general network 10.

In operation, users prepare documents on their workstations and submit the resulting document data files to the CRD for printing and possibly storage in the database 6.

The files for printing are received by the server 5 and are, under the control of a CRD operator, transferred to a printer device 4A, 4B or 4C.

The server 5 runs program software and so forms a system for editing and specifying the print processing of the print job that produces the prints according to the document file submitted by the users. This software has three separate chapters, as exemplified by Fig. 2: page-level specification 21, including page editing functionality, such as page layout specification and image processing, document-level specification 22 for composing documents from page images and production-level specification 23, directed to the physical production control.

The present invention relates to the above-mentioned system for editing and specifying print processing, and more in particular the document-level specification 22 thereof. The invention provides a user interface for the system, and is embodied in software running in the server 5.

In operation, the document specification software features a Document Workspace which offers all functionality that is needed to transform Pages into a fully programmed job. In this workspace the user defines the layout, the media and the finishing options. It is also possible to add elements such as Page numbers and tab captions.

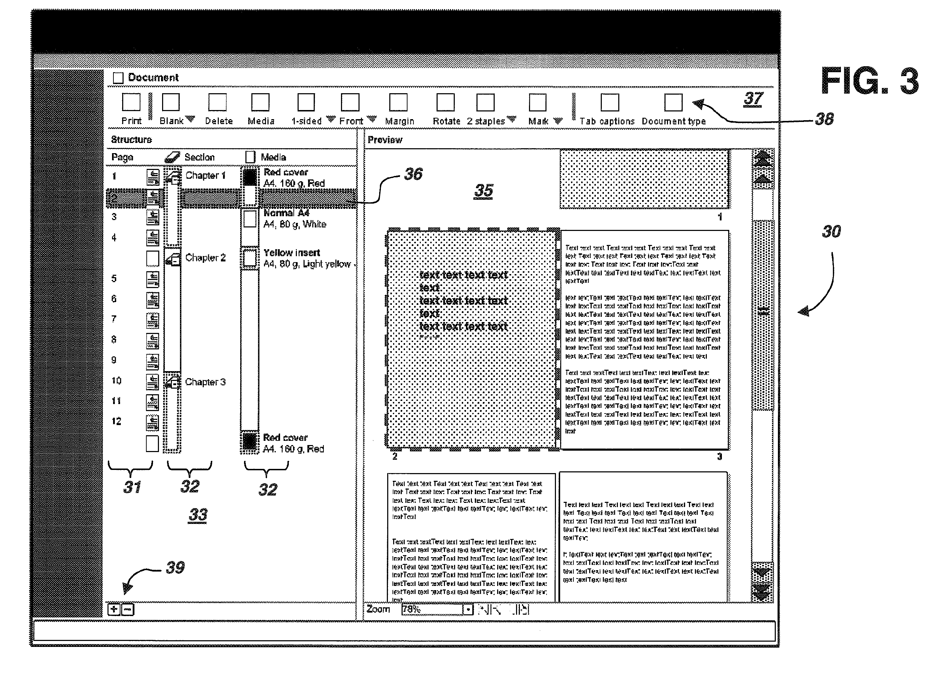

As shown in Fig. 3, the Document Workspace offers a Document View 30 on the display screen of the server 5. The Document View 30 is divided in two panes, the Structure Pane 33 and the Preview Pane 35, which generally are displayed side-by-side.

### Specifying a print job

Settings or specifications for programming a print job for a document file can be set in both the Structure Pane 33 and the Preview Pane 35 by first selecting one or a group of document pages and then selecting relevant functions. Selection of a function can be done by using buttons 38 in the Toolbar 37 or a Context Menu, as will be described below.

First, the Document View display includes a Toolbar 37, which contains buttons 38 for the most important functionality available in the Document View. Each button 38 includes an icon (schematic in Fig. 3) and a caption.

Some of the Toolbar Buttons are of a "Combined" type, i.e. they offer multiple (related) selectable functions in a dropdown Button Menu. The button caption displays the selected Menu item.

The Toolbar 37 shown in Fig. 3 is only schematic. It may hold the following buttons 38:

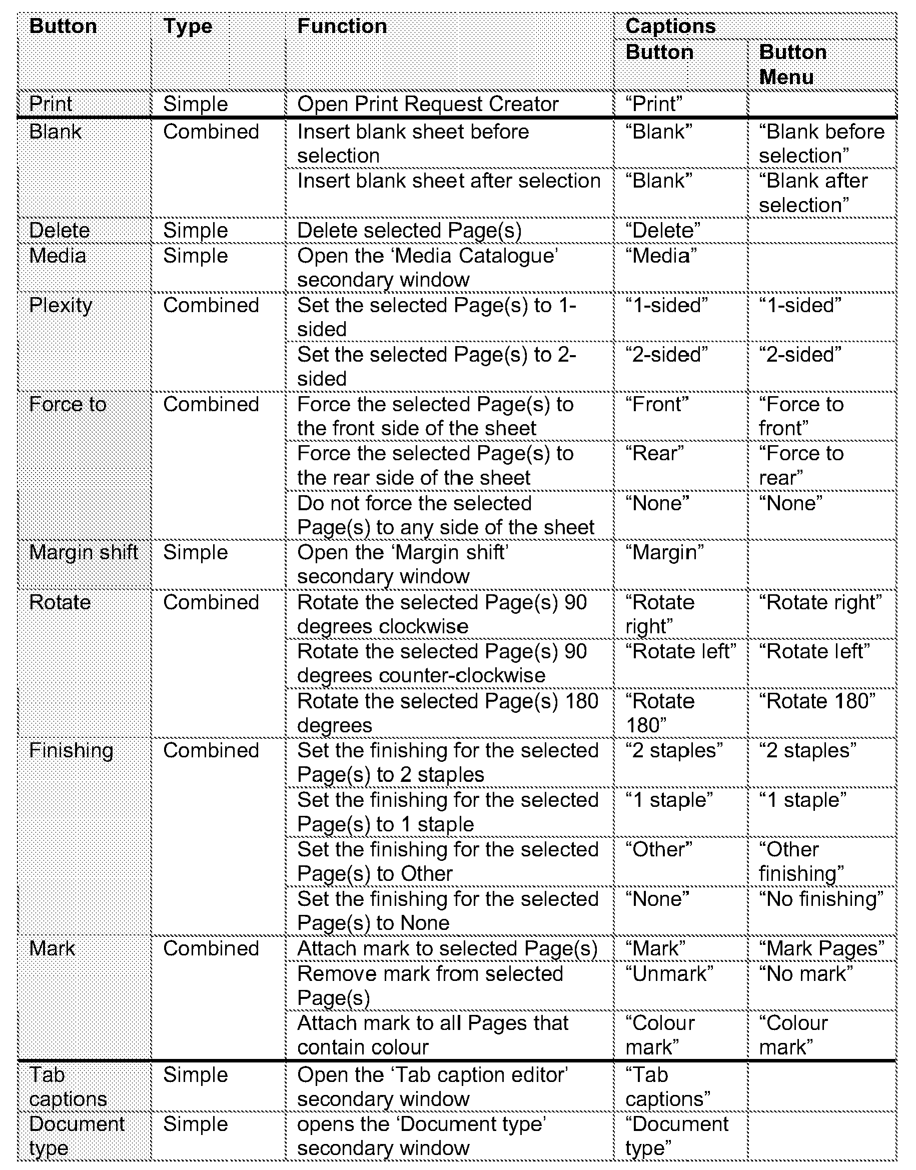

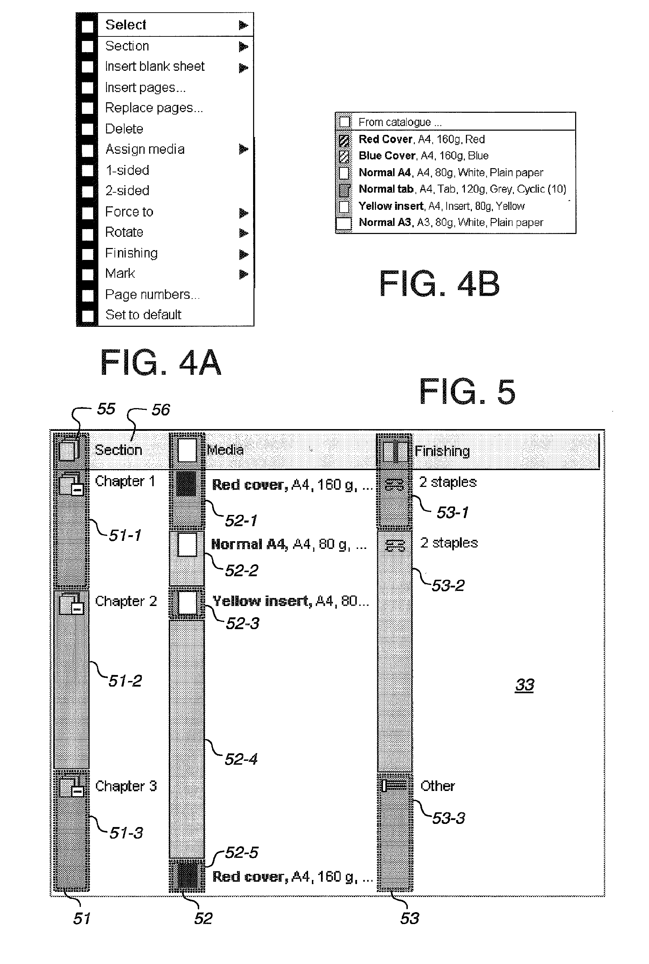

Second, by right-clicking the mouse on a selected document page anywhere in the Document View display, the user may call up a Context Menu as shown in Fig. 4A, and select specifications for the print processing of that page. The options available from the exemplary Context Menu are specified in more detail in the Table below, and are given as an example only. Other, more or less options may be envisaged. In the Table below, arrowheads indicate the presence of secondary menus. The options of the secondary menus are given directly below the main item in the Table. Further, in the Table below, "..." indicates that upon this selection a secondary window will be opened for specifying the required operation further. Menu options preceded by "{}" are single actions not requiring further specification.

| | | |
|---|---|---|
| > | Select | |
| | | All |
| | | Invert |
| | | Same media |
| | | Marked pages |
| > | Select | |
| | ... | Create |
| | ... | Edit |
| | | Delete |
| > | lnsert blank sheet | |
| | | Before selection |
| | | After selection |
| ... | Insert pages | |
| ... | Replace pages | |
| {} | Delete | |
| > | Assign media | |
| | ... | From catalogue |
| | | QUICKPICKLIST (multiple |
| | | possible) |
| {} | 1-sided | |
| {} | 2-sided | |
| > | Force to | |
| | | Front |
| | | Rear |
| | | None |
| ... | Shift margin | |
| > | Rotate | |
| | | Left |
| | | Right |
| | | 180 degrees |
| > | Finishing | |
| | | 2 staples |
| | | 1 staple |
| | | Other |
| | | None |
| > | Mark | |
| | | Mark |
| | | Unmark |
| ... | Page numbers | |
| | Set to default | |

In the submenu of "Assign media", the "From catalogue ..." item opens a "Media Catalogue" in a secondary Window. Below this item, a Quick Pick List (subset of Media Catalogue) is displayed (Fig. 4B). In this list Media icons are displayed in front of the submenu items.

### Structure Pane

The Structure Pane 33 (Fig. 3) and its operation will now be described in more detail with reference to Fig. 4. The Structure Pane offers an overview on the Document as well as easy navigation and selection of Pages.

In the Structure Pane the Pages and Blank sheets in the document are displayed in a list 31, having a sequence number and an icon for each Page. Ghost Pages (i.e. pages not programmed but nevertheless present, e.g. back sides of single sided prints) are not displayed. Additional information about the Pages is displayed in Group Columns 32, each dedicated to a particular grouping criterion or property.

### Grouping

In the Structure Pane, Pages can be grouped on several criteria. As shown in Fig. 5, Pages may, for instance, be grouped on the criteria (sub)Section, Media and Finishing.

Groups are very handy in the print specification process, since they may be selected and (re-)programmed at once. Groups may be formed by selecting a range of Pages in the Document View.

Groups are visualized in the Structure Pane 33 by means of Group Columns 32. Every Column contains a Summary Bar 51, 52, 53, containing icons giving feedback about the properties of the Group, and Group labels displaying these properties in text.

Within the Summary Bar, Groups have alternatingly different appearances, such as background color and/or, as in Fig. 5, perimeter line, for better distinguishability.

Clicking on a Group in a Summary Bar has the effect of selecting the entire Group. This may be done for collectively operating on all members of the Group, such as changing a Group property. For example, in Fig. 3, Page 2 is selected as shown by the dark background colour of the corresponding row 36, as well as by a dark outline in the Preview Pane, to be described later.

Each Group Column has a header icon 55 and a header label 56 displaying the grouping criterion. By double-clicking the header icon 55 of a Group Column, the Group labels may be suppressed; by again double-clicking the header icon 55, the Group labels are restored. Also, the Group label area of a Group Column may be narrowed by dragging the header icon of the neighbouring Group Column into it.

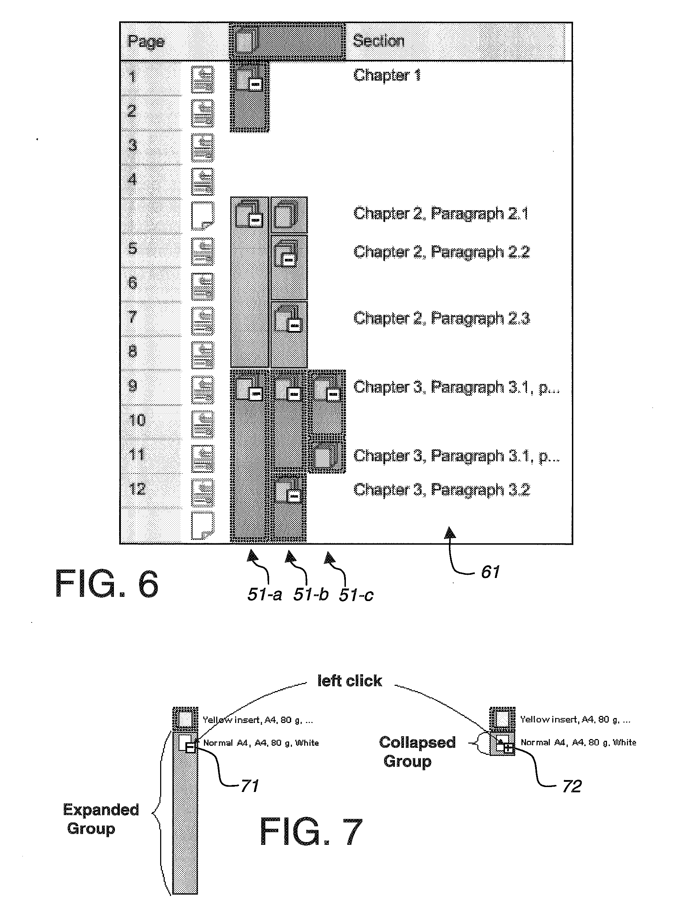

In Fig. 5, Group Columns are shown for the following grouping criteria (or property):
■ *(Sub)Section -* The sequential Pages that belong to the same (sub)Section form a (sub)Section Group. Sections are divisions defined by the user according to document content criteria, such as chapters, and can be subdivided in subsections. Several sub-levels are possible. In Fig. 5, the Section Column 51 is divided in Sections 51-1, 51-2, 51-3 of the document. Sub-levels are shown in Fig. 6 and will be explained below.
■ *Media -* The sequential Pages that have the same Media form a Media Group. The Media Column 52 is divided in Media Groups 52-1, 52-2, 52-3, 52-4, 52-5 in the document.
■ *Finishing -* The sequential Pages that are finished together (e.g., a stapled set) form a Finishing Group. The Finishing Column 53 is divided in Finishing Groups 53-1, 53-2, 53-3 in the document.

The user can define which Group Columns are visible in the Structure Pane 33, and can change the order and width of the Group Columns as will be explained below.

The present invention is not limited to the grouping criteria disclosed above. Other criteria are well within the scope of the invention, such as, e.g., "author" (e.g., for multi-authored documents), date of production, colour properties, etc. Still other criteria are Plexity (simplex or duplex) and/or Force (forced use of front side or back side of a sheet) attribute of a Page. This makes it possible to select a range of 1-sided or 2-sided Pages with one click.

Fig. 6 shows an example of the sub-division of Sections into Subsections. If multiple levels are defined in the Document, these may be made visible in the Section Group Column. For every level a Summary Bar 51-a, 51-b, 51-c is displayed. The Group labels 61 display the names of every Section level. The Group labels are placed behind all the Summary Bars.

It is not always useful to see all levels of (sub)Sections that are defined in the document. When they are not used they only clutter the Structure Pane. Therefore, in an additional embodiment of the present invention, the user is enabled to choose how many levels are visible, e.g. in the Section Column Header.

### Active Column

The leftmost Group Column is called the "Active Column". The Active Column has different properties than the other Columns. In the Active Column, Groups may be collapsed and expanded as will be explained in more detail below. The active state may be visualized by the Summary Bars of the Active Column having different colors than those of the other Columns. Other way of indicating that a Column is the Active one, including the positioning, may be contemplated.

The user may change the order in which the Group Columns are displayed by dragging the Column Header to another position.

If another Group Column is dragged to the leftmost position (behind the Page icon Column) this Group Column becomes the Active Column.

The user can hide or show Group Columns in the Structure Pane by means of the "View" item in the Windows Menu Bar and by means of the Context Menu (right-click on a Column header). In both cases a list of all available Group Columns is shown with clickable tick-marks. A non-ticked Group Column is not displayed ("hidden").

### Collapse and Expand

If a Group in the active Column contains multiple Pages / Blank sheets the Group can be collapsed and expanded in vertical direction by left-click on an Expand/Collapse icon as shown in Fig. 7. The Expand/Collapse icon may have the form of a small rectangle containing a minus sign 71 (for Collapse) or a plus sign 72 (for Expand).

When a Group in the active Column is collapsed, the Page number field of the collapsed set displays the sequence number range contained in the set.

When a Section Group is collapsed, any Subsections belonging to this Section are no longer shown.

If a Group contains only 1 Page or Blank sheet, the Group cannot be collapsed and the Expand/Collapse icon is not displayed.

A Group in the Active Column may be collapsed even though it contains multiple or partial Groups in the other Columns.

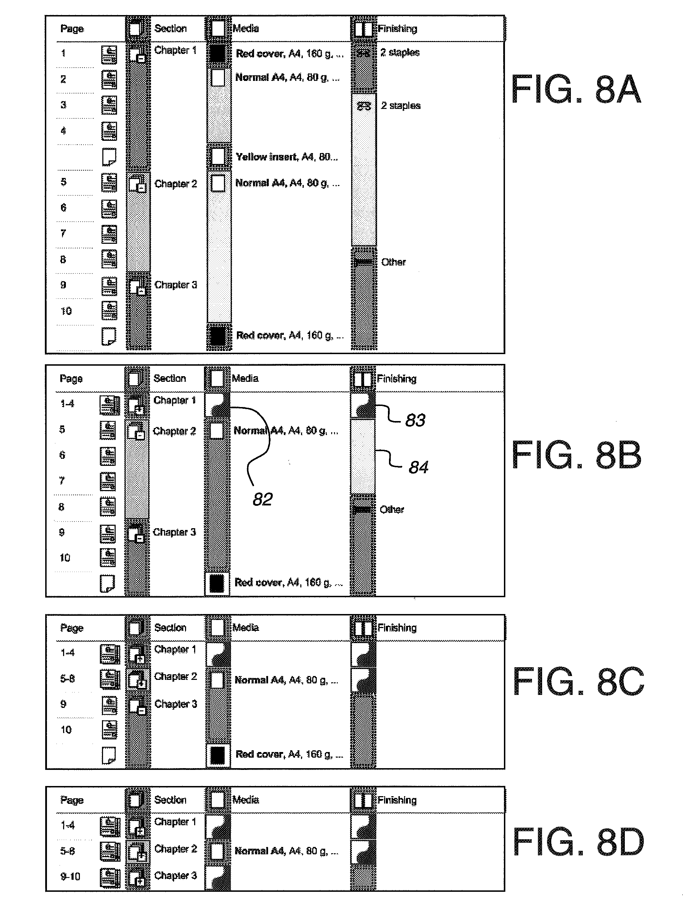

Fig. 8 A-D shows successive steps of collapsing the "Section" Active Column of a document of 10 pages. Fig. 8A depicts the initial situation, where all Groups are completely displayed.

If there is a Group start or a Group end in another Column, within a collapsed set, then a Combined Group symbol 82 is shown in the Summary Bar of that Column. The Group label associated with a Combined Group is empty.

Further, if a Group is only partly contained in a collapsed set, the rest of that Group remains visible in association with the not collapsed part of the display. This is shown in Fig. 8B, where the first Section, "Chapter 1" is collapsed. As can be seen in Fig. 8B, the first 3 Groups of the "Media" Column are collapsed into one Combined Group 82 and while within the "Finishing" Column, the first and part of the second Groups are collapsed into a Combined Group 83. The remaining part of the second "Finishing" Group, which falls within the second "Section" Group ("Chapter 2") remains visible (84) in the "Finishing" Summary Bar.

Fig.s 8C and 8D show the effect of collapsing the Sections "Chapter 2" and "Chapter 3", respectively.

Buttons (39, Fig. 3) are provided in the footer of the Structure Pane for collectively expanding and collapsing all Groups of the document.

### Preview Pane

The Preview Pane 35 offers a WYSIWYG preview of how the document will be after all production steps (in-line and off-line) are completed. To represent the document as realistically as possible, the document is shown in a spread view (facing Pages) and all settings that effect the appearance of the document are displayed in the preview (e.g. staples, tab captions, binding, media colour, Page numbers, etc.). One or more Pages may be selected by clicking on them, in any of the Preview Pane 35 or in the Structure Pane 33.

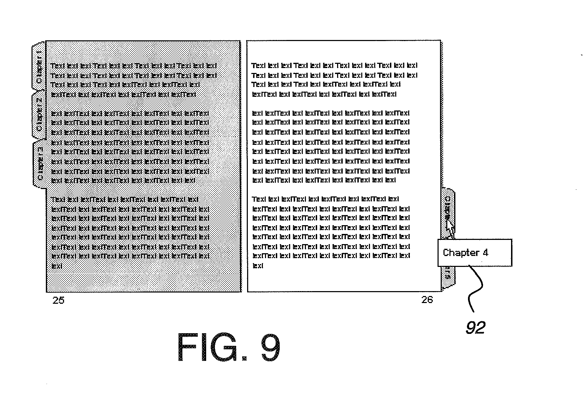

Tab Captions are displayed in the spread view as shown in Fig. 9. The Tabs that are before the left-hand Page in the Spread view are displayed 'behind' this Page. If these Tabs contain a Caption at the rear side of the sheet this Caption is displayed.

Likewise, the Tabs that are behind the right-hand Page in the Spread view are displayed 'behind' this Page. If these Tabs contain a Caption at the front side of the sheet this Caption is displayed. If the mouse is over a Tab Caption a ToolTip 92 displays this Caption as well.

Tab Captions may also be used for navigation. If a Tab Caption is clicked, the Pane scrolls so that the corresponding Page becomes visible.

While the present invention has been explained with reference to the above-described embodiments, it will be clear to the skilled person that the same may be implemented in various other ways. The scope of protection of the patent is defined by the appended claims and encompasses everything the skilled person understands thereby.

## Claims

1. A method of programming processing operations on an ordered set of objects, the objects being characterizable according to a plurality of different properties, in a system having a user interface including a display and a user-operable selection device such as a mouse,
the method including:
displaying a one-dimensional, ordered object list (31) containing representations of the objects of the set,
enabling a user to select an object or a group of objects, a group (51-1, 51-2, 51-3, ...) being an uninterrupted range of objects within the list (31), and
enabling a user to select a property value for the selected object or group of objects, and
assigning the selected property value to the selected object or group of objects with respect to the processing operations,
and being **characterized by**:
displaying at least two property lists (51, 52, 53) associated to and disposed in spatial relationship with the object list (31),
each property list being related to a single object property and indicating values of that property in association with the respective objects in the object list, each respective property value being related to one object or to a said group of objects sharing that property value.

2. The method as claimed in claim 1,
wherein a property list (51, 52, 53) is displayed in parallel with the object list (31),
the property list having visually recognizable sections (51-1, 51-2, 51-3, ...) corresponding to different property values.

3. The method as claimed in claim 2,
wherein a property list (51, 52, 53) is displayed as a bar extending in parallel with the object list,
the bar having visually recognizable sections (51-1, 51-2, 51-3, ...) corresponding to different property values.

4. The method as claimed in claim 2,
wherein each said property list section (51-1, 51-2, 51-3, ...) is operable for selecting the object or group of objects to which that section corresponds.

5. The method as claimed in claim 2,
wherein summary labels are displayed in association with the sections (51-1, 51-2, 51-3, ...) of a property list.

6. The method as claimed in claim 2,
wherein any one of the properly lists (51, 52, 53) can be made dominant, and
wherein each section of the dominant property list, said section being associated to a single property value, is operable to, on a user command, collapse the object list and related property lists for that section.

7. The method as claimed in claim 6,
wherein the object list includes a serial number for each object and in a case where one or more sections are collapsed, a range of serial numbers of objects in the collapsed section.

8. The method as claimed in any one of the preceding claims,
wherein the objects are pages of a digitized document and the processing operations are printing operations.

9. A system for performing processing operations on an ordered set of objects, the objects being characterizable according to a plurality of different properties,
the system including a programming device (5) for programming processing operations, having a user interface including a display and a user-operable selection device such as a mouse, and a processing device (4A, 4B, 4C) for processing said objects,
wherein the programming device (5) is adapted for, through its user interface,:
displaying a one-dimensional, ordered object list (31) containing representations of the objects of the set,
enabling a user to select an object or a group of objects, a group (51-1, 51-2, 51-3, ...) being an uninterrupted range of objects within the list, and
enabling a user to select a property value for the selected object or group of objects, and
assigning the selected property value to the selected object or group of objects with respect to the processing operations,
**characterized in that** the programming device (5) is further adapted for:
displaying at least two property lists (51, 52, 53) associated to and disposed in spatial relationship with the object list (31),
each property list being related to a single object property and indicating values of that property in association with the respective objects in the object list, each respective property value being related to one object or to a said group of objects sharing that property value.

10. The system as claimed in claim 9,
wherein the programming device (5) is adapted to display on its user interface a property list (51, 52, 53) in parallel with the object list (31),
the property list having visually recognizable sections (51-1, 51-2, 51-3, ...) corresponding to different property values.

11. The system as claimed in claim 10,
wherein the programming device (5) is adapted to display a property list (51, 52, 53) on its user interface as a bar extending in parallel with the object list,
the bar having visually recognizable sections (51-1, 51-2, 51-3, ...) corresponding to different property values.

12. The system as claimed in claim 10,
wherein each said property list section (51-1, 51-2, 51-3, ...) as displayed on the user interface is operable for selecting the object or group of objects to which that section corresponds.

13. The system as claimed in claim 10,
wherein the programming device (5) is adapted to display summary labels on its user interface, in association with the sections (51-1, 51-2, 51-3, ...) of a property list.

14. The system as claimed in claim 10,
wherein the programming device (5) allows a user to make any one of the properly lists (51, 52, 53) dominant, and
wherein each section of the dominant property list, said section being associated to a single property value, is operable to, on a user command through the user interface, collapse the object list and related property lists for that section.

15. The system as claimed in claim 14,
wherein the object list as displayed includes a serial number for each object and in a case where one or more sections are collapsed, a range of serial numbers of objects in the collapsed section.

16. The system as claimed in any one of claims 9 to 15,
wherein the objects are pages of a digitized document and the processing devices (4A, 4B, 4C) are printer devices.

17. A computer program product containing computer code that when executed on a computer carry out all the steps of any one of claims 1 to 8.
